(19) **Europäisches Patentamt / European Patent Office / Office européen des brevets**

(11) **EP 4 107 548 B1**

(12) **FASCICULE DE BREVET EUROPEEN**

(45) Date de publication et mention de la délivrance du brevet:
**13.03.2024 Bulletin 2024/11**

(21) Numéro de dépôt: **21703464.4**

(22) Date de dépôt: **09.02.2021**

(51) Classification Internationale des Brevets (IPC):
**G01S 19/21** *(2010.01)*   **G01S 19/36** *(2010.01)*

(52) Classification Coopérative des Brevets (CPC):
**G01S 19/215;** G01S 19/36

(86) Numéro de dépôt international:
**PCT/EP2021/052995**

(87) Numéro de publication internationale:
**WO 2021/165087 (26.08.2021 Gazette 2021/34)**

(54) **MÉTHODE DE DÉTECTION D'UNE SOURCE DE LEURRAGE DANS UN SIGNAL DE RADIONAVIGATION PAR SATELLITE ET DISPOSITIF DE RÉCEPTION ASSOCIÉ**

VERFAHREN ZUR DETEKTION EINER SCHEINQUELLE IN EINEM SATELLITENFUNKNAVIGATIONSSIGNAL UND ZUGEHÖRIGE EMPFANGSVORRICHTUNG

METHOD FOR DETECTING A DECOY SOURCE IN A SATELLITE RADIONAVIGATION SIGNAL AND ASSOCIATED RECEIVING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.02.2020 FR 2001679**

(43) Date de publication de la demande:
**28.12.2022 Bulletin 2022/52**

(73) Titulaire: **THALES**
**92190 Meudon (FR)**

(72) Inventeurs:
- **REVOL, Marc**
  **26120 UPIC (FR)**
- **BOUNIOL, Pierre**
  **26027 VALENCE CEDEX (FR)**
- **FOURNY, Nicolas**
  **26000 VALENCE (FR)**

(74) Mandataire: **Atout PI Laplace**
**Immeuble "Visium"**
**22, avenue Aristide Briand**
**94117 Arcueil Cedex (FR)**

(56) Documents cités:
| | |
|---|---|
| EP-B1- 2 746 813 | WO-A1-2015/142985 |
| US-A1- 2015 048 973 | US-A1- 2015 268 350 |
| US-A1- 2018 372 879 | US-B1- 7 250 903 |

US-B2- 9 689 989

- DOMÍNGUEZ E ET AL: "Multi-Antenna Techniques for NLOS and Spoofing Detection Using Vehicular Real Signal Captures in Urban and Road Environments", GNSS 2015 - PROCEEDINGS OF THE 28TH INTERNATIONAL TECHNICAL MEETING OF THE SATELLITE DIVISION OF THE INSTITUTE OF NAVIGATION (ION GNSS+ 2015), THE INSTITUTE OF NAVIGATION, 8551 RIXLEW LANESUITE 360MANASSAS, VA 20109, USA, 18 septembre 2015 (2015-09-18), pages 2966-2982, XP056011040,
- JAHROMI ALI JAFARNIA ET AL: "Gnss signal authenticity verification using carrier phase measurements with multiple receivers", 2016 8TH ESA WORKSHOP ON SATELLITE NAVIGATION TECHNOLOGIES AND EUROPEAN WORKSHOP ON GNSS SIGNALS AND SIGNAL PROCESSING (NAVITEC), IEEE, 14 décembre 2016 (2016-12-14), pages 1-11, XP033064909, DOI: 10.1109/NAVITEC.2016.7849323

- **PSIAKI MARK L ET AL: "GNSS Spoofing Detection Using Two-Antenna Differential Carrier Phase", GNSS 2014 - PROCEEDINGS OF THE 27TH INTERNATIONAL TECHNICAL MEETING OF THE SATELLITE DIVISION OF THE INSTITUTE OF NAVIGATION (ION GNSS+ 2014), THE INSTITUTE OF NAVIGATION, 8551 RIXLEW LANE SUITE 360 MANASSAS, VA 20109, USA, 12 September 2014 (2014-09-12), pages 2776-2800, XP056007799,**
- **JUNZHI LI ET AL: "Research Progress of GNSS Spoofing and Spoofing Detection Technology", 2019 IEEE 19TH INTERNATIONAL CONFERENCE ON COMMUNICATION TECHNOLOGY (ICCT), IEEE, 16 October 2019 (2019-10-16), pages 1360-1369, XP033683384, DOI: 10.1109/ICCT46805.2019.8947107 [retrieved on 2019-12-31]**

**Description**

L'invention concerne le domaine des récepteurs de signaux de radionavigation par satellite, encore appelés signaux GNSS. Elle s'applique à tout système GNSS, par exemple le système GPS, GALILEO ou GLONASS.

L'invention porte sur un dispositif de réception à double récepteur implémentant une méthode de détection d'une source de leurrage du signal de radionavigation par satellite.

L'invention vise à fournir une solution au problème du leurrage de signaux GNSS par une source de leurrage unique localisée dans l'environnement d'un récepteur. Une telle source de leurrage fonctionne en réceptionnant les signaux GNSS réellement émis par les satellites puis en relayant ces signaux avec ou sans modification. Un objectif d'une source de leurrage est de fausser le calcul de positionnement réalisé par un récepteur GNSS. En effet, le récepteur risque de calculer une position qui correspond non pas à la sienne mais à celle de la source de leurrage ou plus généralement à une position erronée.

La surveillance et la détection d'une source de leurrage ne constitue pas un traitement classique des récepteurs GNSS, même dans le cas de récepteurs dédiés aux applications à sécurité critique (telles que celles des transports, aéronautiques, synchronisation du temps, ....). Cependant, ce domaine génère maintenant un large intérêt après que plusieurs cas de leurrage volontaires ou involontaires aient été démontrés dans des situations opérationnelles réelles.

Une première solution contre les attaques de leurrage est fournie par l'utilisation de signaux authentifiés dont l'accès et l'utilisation sont protégés par des clés connues des seuls utilisateurs autorisés. C'est notamment le cas des signaux GNSS militaires, distribués par la plupart des constellations, mais aussi pour certains signaux civils dits « Safety of Life » ou à vocation « commerciale », tels que par exemple les signaux Galileo OS NMA ou CS/E6B.

Les méthodes utilisant des signaux authentifiés sont efficaces, mais nécessitent l'accès et le maintien de clés utilisateurs et une protection cryptographique au niveau des équipements. Par ailleurs, de tels services sont encore expérimentaux dans le domaine civil, la cryptologie restant pour l'instant réservée aux applications de défense, et présentent encore pas mal de difficultés pour en assurer la certification vis-à-vis des réglementations de sûreté de fonctionnement.

Une deuxième solution qui commence à être proposée pour certains récepteurs commerciaux consiste à mettre en place dans les récepteurs, des contrôles de cohérences sur les caractéristiques des signaux reçus.

Ces caractéristiques concernent, par exemple, le niveau de puissance des signaux reçus, qui peut être évalué au travers des indicateurs de contrôle de gain et de rapport signal à bruit. En effet, un signal de leurrage domine généralement les signaux GNSS utiles, par conséquent un niveau de puissance élevé sur le signal reçu est un indicateur de la présence d'un leurre. Une autre caractéristique de la présence d'un leurre concerne la cohérence entre la phase de code et la phase de porteuse. En effet, il est difficile pour une source de leurrage d'assurer une évolution cohérente de l'évolution du retard (pseudo-distance) et de la phase de la porteuse (doppler intégré) des signaux GNSS, sans la présence de moyens lourds de poursuite du déplacement de la cible à leurrer. Ainsi, en absence de telles informations, la source de leurrage se contente le plus souvent de leurrer le retard de code des signaux et non la phase de la porteuse.

Une autre méthode consiste à réaliser un test de cohérence de l'évolution du rapport signal à bruit pour l'ensemble des satellites. En effet, la simultanéité de l'évolution du rapport signal à bruit sur tous les satellites, en cas de mouvements non prédictibles du porteur, est révélatrice de la transmission de signaux à partir d'un seul émetteur ponctuel qui est donc susceptible d'être une station de leurrage.

Le document "Multi-Antenna Techniques for NLOS and Spoofing Détection Using Vehicular Real Signal Captures in Urban and Road Environments" (DOMÍNGUEZ E ET AL - 18 septembre 2015) représente l'art antérieur.

Les différentes méthodes connues de l'état de l'art nécessitent des aménagements spécifiques pour les récepteurs qui les rendent difficilement utilisables dans le cadre d'applications commerciales ou réglementées par des standards. Notamment, ces méthodes nécessitent des modules de cryptologie ou de gestion de clés ou plus généralement des équipements complémentaires qui nécessitent des modifications importantes des récepteurs.

L'invention propose une méthode de détection de signaux de leurrage basée sur un traitement complémentaire réalisé à partir de mesures standards fournies par des récepteurs GNSS classiques, par exemple dans le cas d'architectures de type « Fail-Safe » implémentant deux chaines de réception redondantes.

L'invention utilise un critère d'identification qui consiste à détecter une situation de leurrage lorsque la direction d'arrivée du signal reçu par un récepteur est la même pour plusieurs satellites. Cette situation correspond à une anomalie qui laisse supposer que tous les signaux sont émis depuis la même source de leurrage.

L'invention présente notamment l'avantage de ne pas nécessiter de traitement spatial complexe de mise en cohérence des signaux reçus.

L'invention a pour objet une méthode de détection d'une source de leurrage d'un signal de radionavigation par satellite, la méthode étant exécutée par un dispositif de réception de signaux de radionavigation par satellite comprenant deux récepteurs, la méthode comprenant les étapes de :

- Pour chaque signal reçu par le dispositif de réception et émis par un satellite différent,

i. Estimer la phase du signal reçu par chaque récepteur,

ii. Calculer la différence des phases estimées pour chaque récepteur,

- Comparer les différences de phases calculées pour plusieurs satellites différents et si au moins deux différences de phases calculées pour deux satellites différents sont sensiblement identiques, conclure à la présence d'une source de leurrage.

Selon un aspect particulier de l'invention, chaque récepteur comprend un corrélateur pour corréler le signal reçu avec un code local associé à un satellite et la phase du signal reçu par chaque récepteur est estimée en sortie de corrélateur.

Selon un mode de réalisation particulier, la méthode selon l'invention comprend en outre les étapes de :

- Calculer, pour au moins un couple de satellites distincts, une double différence de phase égale à la différence entre les différences de phases estimées pour chaque récepteur et pour chaque satellite respectif du couple,

- Conclure à la présence d'une source de leurrage si au moins une double différence de phase calculée est sensiblement nulle.

Selon un mode de réalisation particulier, la méthode selon l'invention comprend en outre les étapes de :

- Calculer la somme de plusieurs doubles différences de phase calculées pour différents couples de satellites distincts,

- Conclure à la présence d'une source de leurrage si la phase de la somme est sensiblement nulle.

La méthode selon l'invention comprend en outre les étapes préalables de, pour chaque signal reçu par le dispositif de réception et émis par un satellite différent :

- Calculer, pour chaque récepteur, une position de réception du signal,

- Déterminer, pour chaque récepteur, la position du satellite lors de l'émission du signal,

- Déterminer une estimée du déplacement apparent dans l'axe à vue du satellite entre les instants d'émission du signal par le satellite correspondant respectivement aux signaux reçus par chaque récepteur,

- Corriger les différences de phases calculées du déplacement apparent estimé.

Selon un aspect particulier de l'invention, la position de réception du signal est calculée à partir des pseudo-distances calculées par le récepteur pour l'ensemble des satellites.

Selon un aspect particulier de l'invention, la position du satellite lors de l'émission du signal est déterminée à partir d'une mesure de temps reçu associée à la pseudo-distance calculée et d'éphémérides.

L'invention a aussi pour objet un dispositif de réception de signaux de radionavigation par satellite comprenant deux récepteurs distincts étant chacun apte à recevoir des signaux de radionavigation par satellite et une unité de calcul configurée pour exécuter les étapes de la méthode de détection d'une source de leurrage d'un signal de radionavigation par satellite selon l'invention.

D'autres caractéristiques et avantages de la présente invention apparaîtront mieux à la lecture de la description qui suit en relation aux dessins annexés suivants :

La figure 1 représente un schéma d'un système de réception GNSS à deux récepteurs dans un environnement perturbé par une station de leurrage,

La figure 2 schématise, sur un organigramme, les principales étapes de mise en oeuvre de la méthode de détection de leurrage selon un premier mode de réalisation de l'invention,

La figure 3 représente un schéma d'un dispositif de réception GNSS selon le premier mode de réalisation de l'invention,

La figure 4 schématise, sur un organigramme, les principales étapes de mise en oeuvre de la méthode de détection de leurrage selon un deuxième mode de réalisation de l'invention,

La figure 5 représente un schéma d'un dispositif de réception GNSS selon le deuxième mode de réalisation de l'invention,

La figure 6 schématise, sur un organigramme, les principales étapes de mise en oeuvre de la méthode de détection de leurrage selon un troisième mode de réalisation de l'invention,

La figure 7 représente un schéma d'un dispositif de réception GNSS selon le troisième mode de réalisation de l'invention.

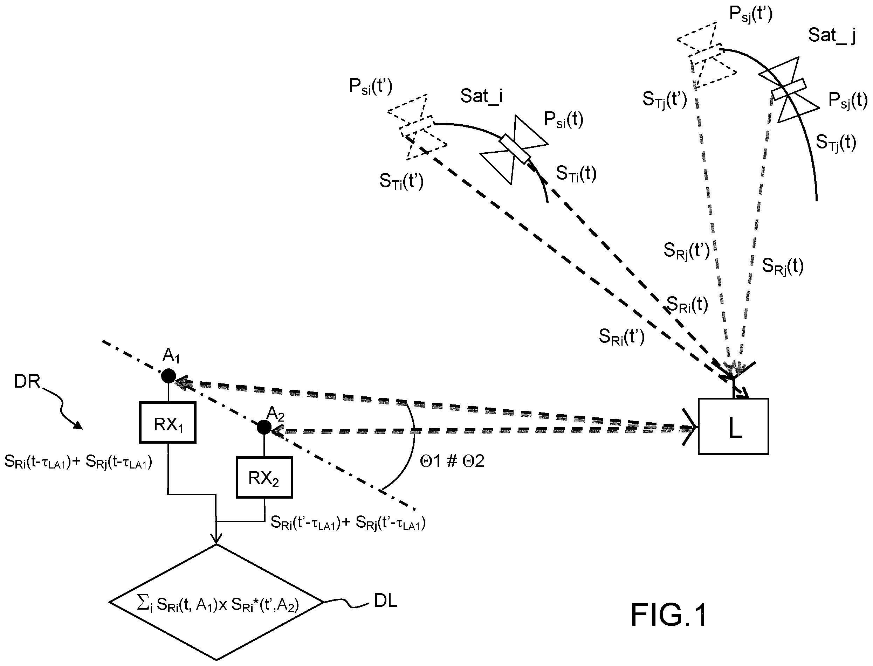

La figure 1 illustre le contexte de mise en oeuvre de l'invention. Une station de leurrage L reçoit des signaux de radionavigation par satellite $S_{Ri}(t)$, $S_{Ri}(t')$, $S_{Rj}(t)$, $S_{Rj}(t')$ provenant de différents satellites SaCi, Sat_j en visibilité et à différents instants t,t'. la station de leurrage L retransmet les signaux vers un dispositif de réception DR qui comprend deux récepteurs distincts Rx1 ,Rx2 ayant chacun une antenne A1 ,A2 et un détecteur de leurrage DL configuré pour détecter le fait que les signaux reçus par le dispositif de réception DR proviennent d'une station de leurrage L et non des satellites Sat_i,Sat_j.

La station de leurrage L agit soit comme un répéteur en retransmettant à l'identique les signaux GNSS reçus ou bien modifie les signaux avant de les retransmettre.

Afin d'expliquer le fonctionnement de la méthode de détection de leurrage selon l'invention, on rappelle au préalable quelques notions concernant les signaux de radionavigation par satellite.

Expression analytique d'un signal GNSS reçu par un récepteur

On note $S_e^i(t)$ le signal émis par un satellite référencé par l'indice i.

$$S_e^i(t) = A_i(t).\exp(2j\pi f_0 t)$$

$A_i(t)$ est le gain du signal, $f_0$ la fréquence du signal.

Le signal reçu par un récepteur situé à une distance $x_i(t)$ du satellite i à l'instant t est donné par la relation suivante, avec c la vitesse du signal.

$$S_r^i(t) = A_i\left(t - \frac{x_i(t)}{c}.\right)\exp(2j\pi f_0\left(t - \frac{x_i(t)}{c}\right))$$

Un récepteur synchronise le signal local estimé $\hat{S}_i^i(t)$ sur sa base de temps décalée de $T_0$ par rapport à celle de la constellation des satellites GNSS, en réalisant un filtrage adapté. Le filtrage adapté correspond au produit entre le signal reçu et une réplique locale du signal (défini par son code d'étalement) conjugué. Ce produit est réalisé au moyen d'un corrélateur qui réalise une corrélation entre un code d'étalement local et le signal reçu.

$$\hat{S}_i^i(t) = S_i^i(t - T_0) = A_i\left(t - T_0 - \frac{x_i(t-T_0)}{c}\right).\exp(2j\pi f_0\left(t - T_0 - \frac{x_i(t-T_0)}{c}\right))$$

Du fait de la périodicité $T_c$ des signaux d'amplitudes (code) et de la phase porteuse ($1/f_0$), on peut aussi écrire le signal local sous la forme :

$$S_i^i(t - T_0) = A_i\left(mod\left(t - T_0 - \frac{x_i(t-T_0)}{c}, T_c\right)\right).\exp(2j\pi f_0\left(mod\left(t - T_0 - \frac{x_i(t-T_0)}{c}, \frac{1}{f_0}\right)\right)$$ où mod() désigne la fonction modulo,

$\hat{P}_r^i(t) = c.\left(T_0 + \frac{x_i(t-T_0)}{c}\right)$ est la pseudo-distance (biaisée) estimée, dans l'axe à vue du satellite i,

$\hat{\varphi}_i(t) = 2j\pi f_0\left(mod\left(T_0 - \frac{x_i(t-T_0)}{c}, \frac{1}{f_0}\right)\right)$ est la phase porteuse estimée, dans l'axe à vue du satellite i,

$T_0$ étant constant, on peut écrire aussi :

$$\hat{\varphi}_i(t) = 2\pi f_0 \left( mod \left( \frac{x_i(t-T_0)}{c}, \frac{1}{f_0} \right) + \varphi_0 \right)$$

La phase du signal reçu est mesurée sur le signal démodulé après désétalement, c'est-à-dire en sortie de corrélation avec le code local.

Expression analytique de l'écart de phase entre un signal GNSS reçu respectivement par deux récepteurs A et B.

Considérons maintenant la phase du signal reçu pour deux positions de réception $P_A$ et $P_B$ correspondant à deux récepteurs A et B et des distances satellite i-récepteur définies par $x_i^A(t)$ et $x_i^B(t)$ .

Pour un même satellite i, les phases des signaux reçus estimées à la réception par les récepteurs A et B (dont les bases de temps sont décalées respectivement de $T_{0A}$ et $T_{0B}$ par rapport au temps système GNSS) s'écrivent :

$$\hat{\varphi}_i^A(t) = 2\pi f_0 \left( mod \left( \frac{x_i^A(t-T_{0A})}{c}, \frac{1}{f_0} \right) + \varphi_0^A \right)$$

$$\hat{\varphi}_i^B(t) = 2\pi f_0 \left( mod \left( \frac{x_i^B(t-T_{0B})}{c}, \frac{1}{f_0} \right) + \varphi_0^B \right)$$

Les vecteurs de Fresnel représentant les phases estimées par les récepteurs A et B s'écrivent :

$$F_i^A(t) = exp\left(j\hat{\varphi}_i^A(t)\right)$$

$$F_i^B(t) = exp\left(j\hat{\varphi}_i^A(t)\right)$$

La différence de phase entre les deux récepteurs pour le satellite i s'écrit :

$$\Delta_{\varphi_i}^{AB}(t) = F_i^A(t).F_i^{B*}(t) = exp\left(j\Delta\hat{\varphi}_i^{AB}(t)\right) = exp\left(j\hat{\varphi}_i^A(t)\right).exp(-j\hat{\varphi}_i^B(t)) =$$

$$exp\left(j\left(\hat{\varphi}_i^A(t) - \hat{\varphi}_i^B(t)\right)\right)$$

$$\Delta_{\varphi_i}^{AB}(t) = exp\left(2j\pi f_0\left(\left(mod\left(\frac{x_i^A(t-T_0)}{c},\frac{1}{f_0}\right) + \varphi_0^A\right) - \left(mod\left(\frac{x_i^B(t-T_0)}{c},\frac{1}{f_0}\right) + \varphi_0^B\right)\right)\right)$$

$$\Delta_{\varphi_i}^{AB}(t) = exp\left(2j\pi f_0\left(mod\left(\frac{x_i^A(t-T_0)-x_i^B(t-T_0)}{c},\frac{1}{f_0}\right) + \varphi_0^A - \varphi_0^B\right)\right)$$

$$\Delta_{\varphi_i}^{AB}(t) = exp\left(2j\pi f_0\left(mod\left(\frac{d_{AB}.cos(\theta_i^{AB})}{c},\frac{1}{f_0}\right) + \varphi_0^A - \varphi_0^B\right)\right)$$

où $\theta_i^{AB}$ est l'angle en gisement d'arrivée du signal i sur l'axe AB des antennes

Le terme $\varphi_0^A - \varphi_0^B$ lié à la désynchronisation de la base de temps des deux récepteurs s'élimine en calculant la double différence entre deux directions d'arrivées des signaux provenant de deux satellites i et j différents.

$$DD_{\varphi_{ij}}^{AB}(t) = \Delta_{\varphi_i}^{AB}(t) - \Delta_{\varphi_j}^{AB}(t) = \exp\left(j\Delta\widehat{\varphi}_i^{AB}(t)\right) . \exp\left(-j\Delta\widehat{\varphi}_j^{AB}(t)\right)$$

Soit,

$$DD_{\varphi_{ij}}^{AB}(t) = \exp\left(2j\pi f_0 . \mod\left(d_{AB} . \frac{\left(\cos(\theta_i^{AB}) - \cos(\theta_j^{AB})\right)}{c}, \frac{1}{f_0}\right)\right)$$

De l'expression précédente de la double différence de phase, on constate que celle-ci ne dépend pas du biais de synchronisation entre les récepteurs A et B. Par ailleurs, en absence de source de leurrage, la double différence de phase est directement liée à la différence entre les angles d'arrivée des signaux provenant des satellites i et j sur l'axe AB entre les deux récepteurs.

Si l'on connait l'attitude et le cap du bras de levier AB entre les deux récepteurs, il est possible de vérifier la correspondance entre les doubles différences de phase estimées et les doubles différences de phase attendues.

Expression analytique d'un signal de leurrage simulant l'ensemble des satellites d'une constellation.

On considère à présent le cas d'une station de leurrage L fonctionnant comme une source qui émet l'ensemble des signaux GNSS correspondant aux satellites visibles (comme explicité sur le schéma de la figure 1).

Les signaux GNSS reçus par la station de leurrage sont retransmis aux récepteurs Rx1,Rx2 après avoir modifié les retards de code et de phase de chacun des signaux satellites, pour les rendre cohérents de ceux qui devraient être reçus par un récepteur cible dont on souhaite leurrer la position et la vitesse.

Tous les signaux sont envoyés sur la même porteuse depuis la source de leurrage vers le récepteur, ils subissent ensemble un retard de propagation égal à $d_{LR}/c$ avec $d_{LR}$ la distance entre la station de leurrage L et le récepteur DR. Les signaux subissent aussi un déphasage Doppler supplémentaire égal à $f_0.(v_{LR}/c)$ supplémentaire que l'on suppose pris en compte et compensé pour ne pas alerter le récepteur cible.

Avec de telles hypothèses, les signaux émis par la source de leurrage s'écrivent via la relation suivante :

$$S_L^E(t) = \sum_{i=1}^{N} A_i\left(t - \frac{x_i^R(t) - d_{LR}}{c}\right) . \exp\left(2j\pi\left(f_0.\left(1 - \frac{v_{LR}}{c}\right)\right)\left(t - \frac{x_i^R(t)}{c}\right)\right)$$

Avec $x_i^R(t)$ la distance entre le satellite i et le récepteur cible du leurrage R

Le signal de leurrage reçu par le récepteur DR s'écrit dans le cas d'une seule antenne de réception en position R :

$$S_L^R(t) = \sum_{i=1}^{N} A_i\left(t - \frac{x_i^R(t)}{c}\right) . \exp\left(2j\pi f_0\left(t - \frac{x_i^R(t)}{c}\right)\right)$$

Expression analytique de l'écart de phase entre deux antennes A et B en réception d'un signal de leurrage

Dans le cas de deux antennes A et B, les signaux reçus sur chacune d'elles s'écrivent :

$$S_R^A(t) = \sum_{i=1}^{N} A_i \left( t - \frac{x_i^R(t) + \frac{d_{LR} - d_{LA}}{c}}{c} \right) . \exp\left( 2j\pi f_0 \left( t - \frac{x_i^R(t) + \frac{d_{LR} - d_{LA}}{c}}{c} \right) \right)$$

$$S_R^B(t) = \sum_{i=1}^{N} A_i \left( t - \frac{x_i^R(t) + \frac{d_{LR} - d_{LB}}{c}}{c} \right) . \exp\left( 2j\pi f_0 \left( t - \frac{x_i^R(t) + \frac{d_{LR} - d_{LB}}{c}}{c} \right) \right)$$

$d_{LA}$ et $d_{LB}$ sont les distances respectives entre la station de leurrage L et chaque antenne A,B.

Le signal local adapté du récepteur DR (base de temps décalée de $T_0$) s'écrit, selon les notations précédentes :

$$S_L^A(t) =$$

$$\sum_{i=1}^{N} A_i \left( mod \left( t - T_0 - \frac{x_i^R(t) + \frac{d_{LR} - d_{LA}}{c}}{c}, T_c \right) \right) . \exp 2j\pi f_0 \left( mod \left( \frac{x_i^R(t) + \frac{d_{LR} - d_{LA}}{c}}{c}, \frac{1}{f_0} \right) + \varphi_0^A \right)$$

$$S_L^B(t) =$$

$$\sum_{i=1}^{N} A_i \left( mod \left( t - T_0 - \frac{x_i^R(t) + \frac{d_{LR} - d_{LB}}{c}}{c}, T_c \right) \right) . \exp 2j\pi f_0 \left( mod \left( \frac{x_i^R(t) + \frac{d_{LR} - d_{LB}}{c}}{c}, \frac{1}{f_0} \right) + \varphi_0^B \right)$$

Les phases des signaux reçus sur les récepteurs A et B s'écrivent :

$$\hat{\varphi}_i^A(t) = 2\pi f_0 \left( mod \left( \frac{x_i^R(t) + \frac{d_{LR} - d_{LA}}{c}}{c}, \frac{1}{f_0} \right) + \varphi_0^A \right)$$

$$\hat{\varphi}_i^B(t) = 2\pi f_0 \left( mod \left( \frac{x_i^R(t) + \frac{d_{LR} - d_{LB}}{c}}{c}, \frac{1}{f_0} \right) + \varphi_0^B \right)$$

Les vecteurs de Fresnel représentant les phases estimées par les récepteurs A et B s'écrivent :

$$F_i^A(t) = exp\left( j\hat{\varphi}_i^A(t) \right)$$

$$F_i^B(t) = exp\left( j\hat{\varphi}_i^A(t) \right)$$

La différence de phase entre les deux antennes pour le signal i s'écrit :

$$\Delta_{\varphi_i}^{AB}(t) = F_i^A(t) . F_i^{B*}(t) = exp\left( j\Delta\hat{\varphi}_i^{AB}(t) \right) = exp\left( j\hat{\varphi}_i^A(t) \right) . exp\left( -j\hat{\varphi}_i^B(t) \right) =$$

$$exp\left( j \left( \hat{\varphi}_i^A(t) - \hat{\varphi}_i^B(t) \right) \right)$$

$$\Delta_{\varphi_i}^{AB}(t) =$$

$$exp\left(2j\pi f_0\left(\left(mod\left(\frac{x_i^R(t)+d_{LR}-d_{LA}}{c},\frac{1}{f_0}\right)+\varphi_0^A\right)-\left(mod\left(\frac{x_i^R(t)+d_{LR}-d_{LB}}{c},\frac{1}{f_0}\right)+\varphi_0^B\right)\right)\right)$$

$$\Delta_{\varphi_i}^{AB}(t) = exp\left(2j\pi f_0\left(mod\left(\frac{d_{LA}-d_{LB}}{c},\frac{1}{f_0}\right)+\varphi_0^A-\varphi_0^B\right)\right)$$

$$\Delta_{\varphi_i}^{AB}(t) = exp\left(2j\pi f_0\left(mod\left(\frac{d_{AB}.\cos(\theta_L^{AB})}{c},\frac{1}{f_0}\right)+\varphi_0^A-\varphi_0^B\right)\right)$$

où $\theta_L^{AB}$ est l'angle en gisement d'arrivée du signal de leurrage L sur l'axe AB des antennes (et non plus l'angle associé aux satellites).

On montre ainsi que le terme $\Delta_{\varphi_i}^{AB}(t)$ ne dépend pas de la direction satellite et reste uniquement lié à la direction d'arrivée du signal de leurrage.

Un test de l'existence d'une source de leurrage ou d'un répéteur à source d'émission unique consiste alors à vérifier que le terme $\Delta_{\varphi_i}^{AB}(t)$ reste indépendant de la direction du satellite.

L'invention est basée sur les principes décrits ci-dessus.

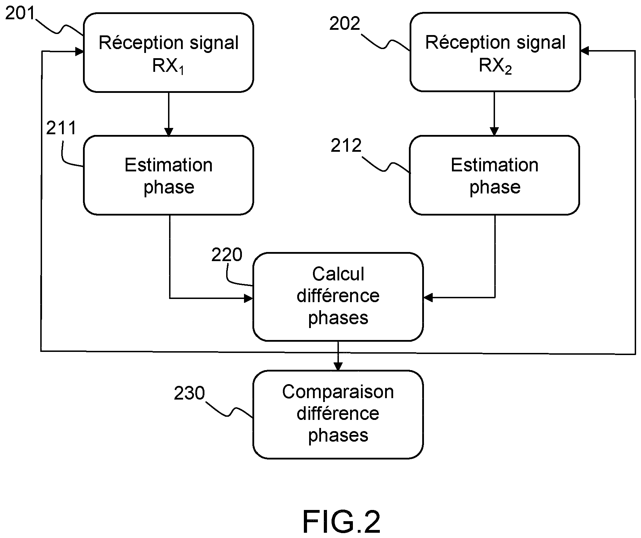

La figure 2 détaille les étapes de réalisation d'une méthode de détection de leurrage selon un premier mode de réalisation de l'invention.

Les signaux GNSS émis par la station de leurrage L sont reçus 201,202 par chaque récepteur RX1,RX2.

Chaque signal reçu est corrélé avec un code d'étalement local qui permet d'identifier le satellite émetteur i. Cette technique est bien connue du domaine des récepteurs GNSS et n'est pas détaillée ici.

A partir des signaux reçus sur chaque récepteur pour le même satellite i, on estime 211,212 la phase des signaux $\hat{\varphi}_i^A(t), \hat{\varphi}_i^B(t)$, en sortie de corrélation.

Ensuite, dans une étape 220 on calcule la différence des phases $\Delta_{\varphi_i}^{AB}(t)$.

Les étapes 201,202,211,212,220 sont itérées pour plusieurs satellites différents.

Enfin, dans une dernière étape 230, on compare les valeurs des différences de phases $\Delta_{\varphi_i}^{AB}(t)$ calculées pour plusieurs satellites i. Si au moins deux valeurs sont sensiblement identiques pour deux satellites i, j différents, cela signifie que ces signaux ont été émis depuis la même source et donc qu'ils sont leurrés.

L'étape de comparaison 230 est, par exemple, réalisée en comparant la différence en valeur absolue de deux différences de phases à un seuil prédéterminé.

$$\left|\Delta_{\varphi_i}^{AB}(t)-\Delta_{\varphi_j}^{AB}(t)\right|>\varepsilon.$$

Le seuil $\varepsilon$ est fixé légèrement supérieur à 0 pour prendre en compte le bruit de calcul. Si le seuil est dépassé, cela signifie que les deux valeurs sont différentes et que les signaux ne proviennent pas de la même source. Dans le cas contraire, les signaux correspondants sont détectés comme étant leurrés.

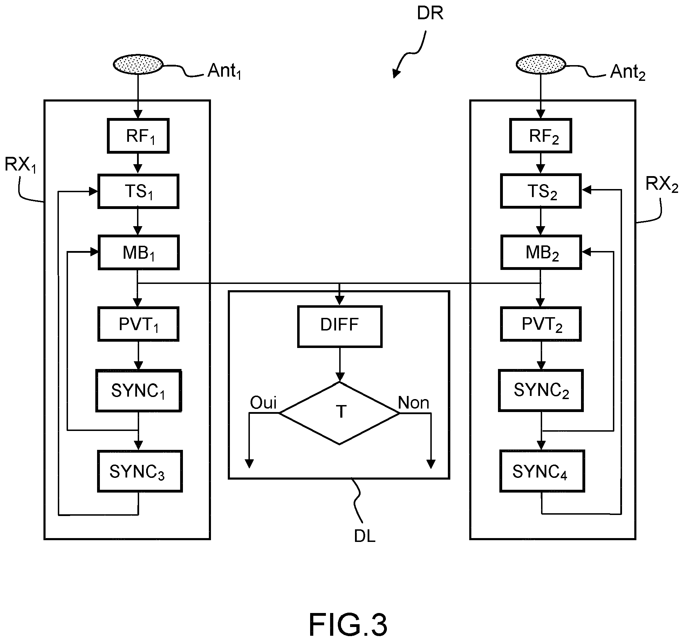

La figure 3 schématise un exemple d'un premier mode de réalisation du dispositif de réception DR configuré pour mettre en oeuvre la méthode de détection de leurrage décrite à la figure 2.

Le dispositif DR comprend deux récepteurs RX1,RX2. Chaque récepteur comprend une antenne ANT1,ANT2 pour recevoir des signaux GNSS, une chaine de traitement radiofréquence RF1,RF2 (comprenant un ou plusieurs filtres et/ou un ou plusieurs amplificateurs), un module de traitement de signal TS1,TS2 un module de calcul de mesures brutes MB1,MB2, un module de calcul de position, vitesse et temps PVT1,PVT2, un premier module de synchronisation SYNC1,SYNC2 pour aligner en temps réel le temps local de chaque récepteur RX1,RX2 sur le temps de la constellation GNSS et un second module de synchronisation SYNC3,SYNC4.

Le module de traitement de signal TS1,TS2 comprend au moins un convertisseur analogique numérique pour numériser le signal reçu, ainsi qu'un corrélateur pour corréler le signal numérique avec un code d'étalement généré localement.

Le module de calcul de mesures brutes MB1,MB2 reçoit le signal démodulé par le module de traitement de signal et réalise les boucles de poursuite de code (ou DLL) et de phase (PLL) qui servent à extraire des mesures brutes de temps reçu et de Doppler. Dans ce qui suit, on appelle instant de prise de mesure, l'instant auquel est réalisé l'extraction des mesures brutes de temps et de Doppler.

Le module de calcul PVT1,PVT2 détermine des informations de position, vitesse, temps à partir des mesures brutes.

Le premier module de synchronisation SYNC1,SYNC2 réalise la synchronisation des bases de temps locales des deux récepteurs à partir d'un calcul de décalage de temps local estimé par le module PVT1 ,PVT2 à l'instant de prise de mesure.

Le second module de synchronisation SYNC3,SYNC4 est utilisé pour synchroniser les instants de prise de mesure (de temps reçu et de phase de code) entre les deux récepteurs RX1 ,RX2, sur un même temps de référence (par exemple à chaque seconde) de la constellation GNSS.

Le dispositif DR comprend en outre un module de détection de leurrage DL configuré pour exécuter les étapes 211,212,220,230 du procédé décrit à la figure 2.

Le module DL comprend par exemple une unité de calcul DIFF pour calculer les différences de phases 220 et un organe de comparaison pour réaliser le test 230.

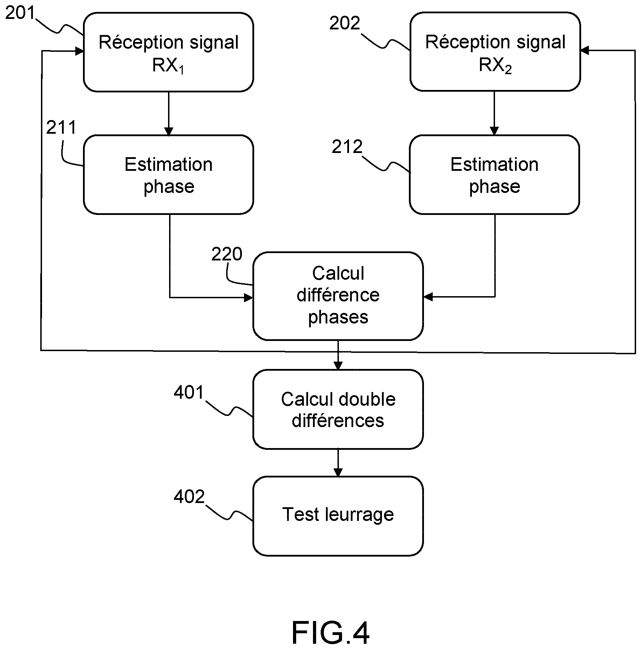

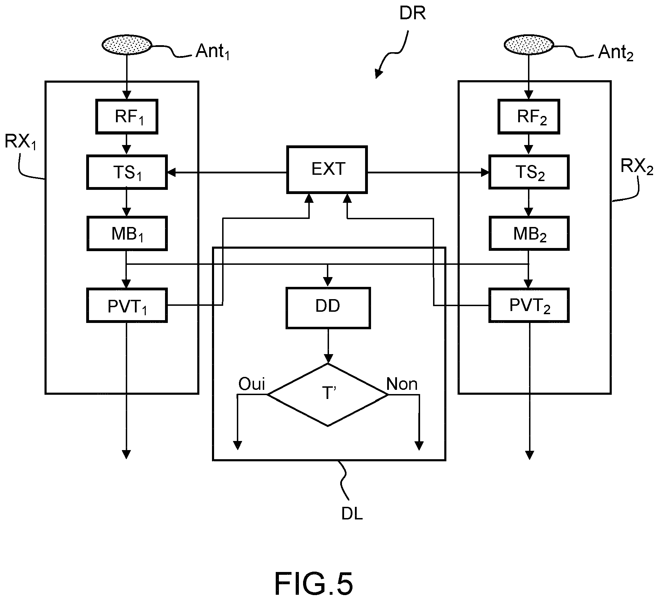

Les figures 4 et 5 illustrent un deuxième mode de réalisation de l'invention dans lequel on prend l'hypothèse que les bases de temps locales des récepteurs RX1,RX2 ne sont pas synchronisées. Autrement dit, les modules de synchronisation SYNC1,SYNC2 du temps local des récepteurs sur le temps de la constellation de satellites GNSS ne sont pas présents dans les récepteurs RX1 ,RX2.

Par contre, on suppose que les instants de prise de mesures brutes des deux récepteurs sont synchronisés sur un même temps grâce à un signal de synchronisation externe EXT (cad. un signal physique permettant aux récepteurs de déclencher la prise de mesure au temps correspondant à ce signal). Ainsi, la synchronisation des instants de prise de mesure est réalisée par ce moyen externe EXT et les modules de synchronisation SYNC3,SYNC4 sont également supprimés.

Dans ce cas, le terme $\varphi_0^A - \varphi_0^B$ dans l'expression de la différence de phase $\Delta_{\varphi_i}^{AB}(t)$ n'est plus forcément constant.

Le deuxième mode de réalisation de l'invention permet de résoudre ce problème en ajoutant au procédé décrit à la figure 2 une étape supplémentaire 401 de calcul de doubles différences de phases.

En effet, le terme $\varphi_0^A - \varphi_0^B$ s'élimine en calculant la double différence entre les différences de phase complexes calculées pour deux satellites différents i et j.

$$DD_{\varphi_{ij}}^{AB}(t) = \arg(\Delta_{\varphi_i}^{AB}(t) - \Delta_{\varphi_j}^{AB}(t)) = \arg(\exp\left(j\Delta\widehat{\varphi}_i^{AB}(t)\right).\exp\left(-j\Delta\widehat{\varphi}_j^{AB}(t)\right))$$

Soit

$$DD_{\varphi_{ij}}^{AB}(t) = \arg(\exp\left(2j\pi f_0.\operatorname{mod}\left(d_{AB}.\frac{\left(\cos(\theta_L^{AB})-\cos(\theta_L^{AB})\right)}{c}, \frac{1}{f_0}\right)\right)) = 0$$

Ainsi, la double différence de phase $DD_{\varphi_{ij}}^{AB}(t)$ vaut 0 lorsque les signaux des satellites i et j proviennent de la même source de leurrage.

L'étape 401 de la méthode décrite à la figure 4 consiste ainsi à calculer plusieurs double différences de phase entre plusieurs couples de satellites (i,j).

Ainsi, la méthode de détection de leurrage selon le deuxième mode de réalisation de l'invention comporte une étape 402 de test qui consiste à vérifier si au moins une double différence de phase est sensiblement nulle. Alternativement, une moyenne ou une somme de plusieurs doubles différences de phase peut être réalisée.

L'étape 402 de test, consiste, par exemple, à comparer la valeur absolue de chaque double différence de phase calculée à un seuil $\varepsilon$ légèrement supérieur à 0 comme pour l'étape 230.

La figure 5 schématise un exemple de dispositif de réception DR configuré pour mettre en oeuvre la méthode de détection de leurrage selon le deuxième mode de réalisation de l'invention.

Par rapport au schéma de la figure 3, chaque récepteur RX1,RX2 comporte les mêmes éléments déjà décrits à l'exception des modules de synchronisation SYNC1,SYNC2,SYNC3,SYNC4. Le dispositif de réception DR comprend par ailleurs un module externe EXT supplémentaire de synchronisation des instants de prise de mesure des deux récepteurs.

Ainsi, les bases de temps locales des deux récepteurs ne sont plus synchronisées, mais les instants de prise de mesures restent synchrones sur un même temps de la constellation GNSS.

Le module de détection de leurrage DL comporte une unité de calcul DD configurée pour exécuter les étapes 211,212,220,401 de la méthode décrite à la figure 4, ainsi qu'un comparateur T' pour réaliser le test de l'étape 402.

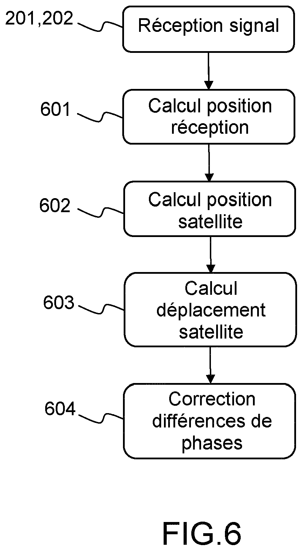

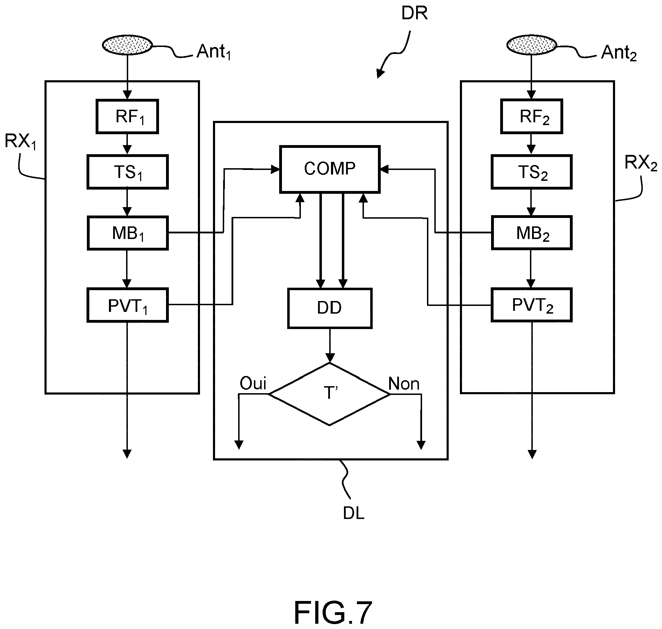

Les figures 6 et 7 décrivent un troisième mode de réalisation de l'invention dans lequel on considère que les instants d'échantillonnage des signaux reçus par les récepteurs RX1,RX2 ne sont pas synchronisés. Autrement dit, on considère que les récepteurs RX1,RX2 ne contiennent pas de modules de synchronisation SYNC3,SYNC4, internes ni de module externe EXT, des instants de prise de mesure.

Si les instants d'échantillonnage ne sont pas synchronisés sur les deux récepteurs RX1,RX2, la distance apparente d'un même satellite pourra avoir évolué entre les deux instants de prélèvements, conduisant ainsi à biaiser l'estimation de la différence de chemin de propagation entre les deux récepteurs.

En effet, si les instants de prise de mesure sont différents sur les deux récepteurs, les phases de code et porteuse des signaux GNSS reçus correspondront à des temps reçus GNSS différents, et donc aussi à des dates d'émission différentes de ces signaux.

Pour un même satellite, la position du satellite correspondant à chacune de ces deux dates différentes est donc aussi différente. Par exemple un écart de 10ms seulement entre des dates de prise de mesures correspond à un déplacement de 40m d'un satellite se déplaçant à 4km/s. Il faut donc tenir compte du déplacement du satellite correspondant aux écarts de temps reçu GNSS aux deux instants de prise de mesure.

Ainsi, dans ce cas, la double différence de phase est exprimée via la relation suivante :

$$DD_{\varphi_{ij}}^{AB}(t, t') = \arg\left(\exp\left(2j\pi f_0 . mod\left(\frac{\Delta x_i^R(t,t\prime) - \Delta x_j^R(t,t')}{c}, \frac{1}{f_0}\right)\right)\right) \neq 0$$

Du fait de la différence entre les deux instants d'échantillonnage t,t' des deux récepteurs, la valeur de

$DD_{\varphi_{ij}}^{AB}(t, t')$ n'est plus égale à 0 lorsque les signaux émis par deux satellites i et j proviennent d'une même source de leurrage.

Pour résoudre ce problème, un troisième mode de réalisation de l'invention est proposé dans lequel les différences de phases calculées aux étapes 211,212 par chaque récepteur sont, au préalable, corrigées d'un déphasage résultant du déplacement du satellite entre les deux instants de prise de mesure t et t' de chaque récepteur.

La figure 6 détaille les étapes nécessaires pour réaliser cette correction.

A partir du signal reçu, leurré, on calcule 601 les pseudo-distances estimées pour chaque récepteur RX1,RX2 qui permettent ensuite de déduire une position leurrée supposée voisine du dispositif de réception DR.

A partir des mesures de temps reçus GNSS tr et tr' associées à chaque pseudo-distance estimée, aux instants de prise de mesure t et t', on calcule 602, à partir d'éphémérides, la position du satellite lors de l'émission du signal correspondant aux temps reçus tr et tr'.

Ensuite, on estime 603 le déplacement du satellite entre la date d'émission tr du signal reçu par le premier récepteur RX1 à l'instant de prise de mesure t et la date d'émission tr' du signal reçu par le second récepteur RX2 à l'instant de prise de mesure t'.

On en déduit enfin 604, une correction à appliquer aux différences de phases pour compenser la différence de marche du signal entre les antennes des récepteurs Rx1 et Rx2 due au déplacement apparent dans l'axe à vue du satellite entre les deux instants tr et tr'.

Autrement dit, on calcule la différence entre la distance apparente calculée entre la position du satellite au temps tr et la position leurrée d'une part et la distance apparente calculée entre la position du satellite au temps tr' et la position leurrée.

Les procédés décrits aux figures 2 et 4 s'appliquent ensuite à l'identique aux signaux corrigés.

La figure 7 schématise un exemple de dispositif de réception DR configuré pour exécuter la méthode de détection de leurrage selon le troisième mode de réalisation de l'invention.

Par rapport au schéma de la figure 5, chaque récepteur RX1,RX2 comporte les mêmes éléments déjà décrits à l'exception des modules de synchronisation SYNC3,SYNC4, EXT interne ou externe, des instants de prise de mesure. Ainsi, les instants d'échantillonnage des deux récepteurs ne sont pas synchronisés.

Le module de détection de leurrage DL comporte une unité de calcul COMP pour exécuter les étapes 601,602,603,604 de la méthode décrite à la figure 6 et ainsi fournir des différences de phase corrigées qui sont ensuite transmises à l'unité de calcul de double différence de phase DD.

L'invention s'applique notamment pour des dispositifs de réception de signaux GNSS embarqués dans des aéronefs.

Chacun des éléments du récepteur selon l'invention peut être réalisé sous forme logicielle et/ou matérielle à partir d'un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

## Revendications

1. Méthode de détection d'une source de leurrage d'un signal de radionavigation par satellite, la méthode étant exécutée par un dispositif de réception (DR) de signaux de radionavigation par satellite comprenant deux récepteurs (RX1 ,RX2), la méthode comprenant les étapes de :

   - Pour chaque signal reçu par le dispositif de réception et émis par un satellite différent,

      i. Estimer (211,212) la phase du signal reçu par chaque récepteur,
      ii. Calculer (220) la différence des phases estimées pour chaque récepteur,

   - Comparer (230) les différences de phases calculées pour plusieurs satellites différents et si au moins deux différences de phases calculées pour deux satellites différents sont sensiblement identiques, conclure à la présence d'une source de leurrage, la méthode étant **caractérisée en ce qu'**elle comprend en outre les étapes préalables de, pour chaque signal reçu par le dispositif de réception et émis par un satellite différent :
   - Calculer (601), pour chaque récepteur, une position de réception du signal,
   - Déterminer (602), pour chaque récepteur, la position du satellite lors de l'émission du signal,
   - Déterminer (603) une estimée du déplacement apparent dans l'axe à vue du satellite entre les instants d'émission du signal par le satellite correspondant respectivement aux signaux reçus par chaque récepteur,
   - Corriger (604) les différences de phases calculées du déplacement apparent estimé.

2. Méthode de détection d'une source de leurrage selon la revendication 1 dans laquelle chaque récepteur comprend un corrélateur pour corréler le signal reçu avec un code local associé à un satellite et la phase du signal reçu par chaque récepteur est estimée en sortie de corrélateur.

3. Méthode de détection d'une source de leurrage selon l'une des revendications précédentes comprenant en outre les étapes de :

   - Calculer (401), pour au moins un couple de satellites distincts, une double différence de phase égale à la différence entre les différences de phases estimées pour chaque récepteur et pour chaque satellite respectif du couple,
   - Conclure (402) à la présence d'une source de leurrage si au moins une double différence de phase calculée est sensiblement nulle.

4. Méthode de détection d'une source de leurrage selon la revendication 3 comprenant en outre les étapes de :

   - Calculer (401) la somme de plusieurs doubles différences de phase calculées pour différents couples de satellites distincts,

- Conclure (402) à la présence d'une source de leurrage si la phase de la somme est sensiblement nulle.

**5.** Méthode de détection d'une source de leurrage selon l'une quelconque des revendications précédentes dans laquelle la position de réception du signal est calculée (601) à partir des pseudo-distances calculées par le récepteur pour l'ensemble des satellites.

**6.** Méthode de détection d'une source de leurrage selon l'une quelconque des revendications précédentes dans laquelle la position du satellite lors de l'émission du signal est déterminée (602) à partir d'une mesure de temps reçu associée à la pseudo-distance calculée et d'éphémérides.

**7.** Dispositif de réception de signaux de radionavigation par satellite comprenant deux récepteurs distincts (RX1 ,RX2) étant chacun apte à recevoir des signaux de radionavigation par satellite et une unité de calcul (DL) configurée pour exécuter les étapes de la méthode de détection d'une source de leurrage d'un signal de radionavigation par satellite selon l'une quelconque des revendications 1 à 6.

**Patentansprüche**

**1.** Verfahren zum Erkennen einer Scheinquelle eines Satellitenfunknavigationssignals, wobei das Verfahren von einer zwei Empfänger (RX1, RX2) umfassenden Satellitenfunknavigationssignal-Empfangsvorrichtung (DR) durchgeführt wird, wobei das Verfahren die folgenden Schritte umfasst:

- für jedes von der Empfangsvorrichtung empfangene und von einem unterschiedlichen Satelliten gesendete Signal,

i. Schätzen (211, 212) der Phase des von jedem Empfänger empfangenen Signals,
ii. Berechnen (220) der Differenz der geschätzten Phasen für jeden Empfänger,

- Vergleichen (230) der für mehrere unterschiedliche Satelliten berechneten Phasendifferenzen und Schließen, wenn mindestens zwei für zwei unterschiedliche Satelliten berechnete Phasendifferenzen im Wesentlichen identisch sind, auf das Vorhandensein einer Scheinquelle,

wobei das Verfahren **dadurch gekennzeichnet ist, dass** es ferner für jedes von der Empfangsvorrichtung empfangene und von einem unterschiedlichen Satelliten gesendete Signal die folgenden Vorabschritte umfasst:

- Berechnen (601), für jeden Empfänger, einer Signalempfangsposition,
- Bestimmen (602), für jeden Empfänger, der Position des Satelliten beim Senden des Signals,
- Bestimmen (603) einer Schätzung der scheinbaren Verschiebung in der Sichtlinie des Satelliten zwischen den Sendezeitpunkten des Signals durch den Satelliten jeweils entsprechend den von jedem Empfänger empfangenen Signalen,
- Korrigieren (604) der berechneten Phasendifferenzen der geschätzten scheinbaren Verschiebung.

**2.** Verfahren zum Erkennen einer Scheinquelle nach Anspruch 1, wobei jeder Empfänger einen Korrelator zum Korrelieren des empfangenen Signals mit einem mit einem Satelliten assoziierten lokalen Code umfasst und die Phase des von jedem Empfänger empfangenen Signals am Ausgang des Korrelators geschätzt wird.

**3.** Verfahren zum Erkennen einer Scheinquelle nach einem der vorhergehenden Ansprüche, das ferner die folgenden Schritte umfasst:

- Berechnen (401), für mindestens ein Paar unterschiedlicher Satelliten, einer doppelten Phasendifferenz von gleich der Differenz zwischen den für jeden Empfänger geschätzten Phasendifferenzen und für jeden jeweiligen Satelliten des Paares,
- Schließen (402) auf das Vorhandensein einer Scheinquelle, wenn mindestens eine berechnete Doppelphasendifferenz im Wesentlichen null ist.

**4.** Verfahren zum Erkennen einer Scheinquelle nach Anspruch 3, das ferner die folgenden Schritte umfasst:

- Berechnen (401) der Summe mehrerer doppelter Phasendifferenzen, die für verschiedene Paare unterschiedlicher Satelliten berechnet wurden,
- Schließen (402) auf das Vorhandensein einer Scheinquelle, wenn die Phase der Summe im Wesentlichen null ist.

5. Verfahren zum Erkennen einer Scheinquelle nach einem der vorhergehenden Ansprüche, wobei die Signalempfangsposition auf der Basis der vom Empfänger für alle Satelliten berechneten Pseudoentfernungen berechnet wird (601).

6. Verfahren zum Erkennen einer Scheinquelle nach einem der vorhergehenden Ansprüche, wobei die Position des Satelliten beim Senden des Signals auf der Basis einer mit der berechneten Pseudoentfernung assoziierten empfangenen Zeitmessung und von Ephemeriden bestimmt wird (602).

7. Vorrichtung zum Empfangen von Satellitenfunknavigationssignalen umfassend zwei getrennte Empfänger (RX1, RX2), die jeweils zum Empfangen von Satellitenfunknavigationssignalen geeignet sind, und einer Recheneinheit (DL), die zum Ausführen der Schritte des Verfahrens zum Erkennen einer Scheinquelle eines Satellitenfunknavigationssignals nach einem der Ansprüche 1 bis 6 konfiguriert ist.

**Claims**

1. A method for detecting a decoy source of a satellite radionavigation signal, the method being executed by a satellite radionavigation signal reception device (DR) comprising two receivers (RX1, RX2), the method comprising the steps of:

   - for each signal received by the reception device and transmitted by a different satellite,

      i. estimating (211, 212) the phase of the signal received by each receiver,
      ii. computing (220) the estimated phase difference for each receiver,

   - comparing (230) the phase differences computed for multiple different satellites and, if at least two phase differences computed for two different satellites are substantially identical, concluding that a decoy source is present,

   the method being **characterised in that** it further comprises the preliminary steps of, for each signal received by the reception device and transmitted by a different satellite:

   - computing (601), for each receiver, a signal reception position,
   - determining (602), for each receiver, the position of the satellite when the signal is transmitted,
   - determining (603) an estimate of the apparent displacement in the line of sight of the satellite between the transmission times of the signal by the satellite corresponding respectively to the signals received by each receiver,
   - correcting (604) the computed phase differences for the estimated apparent displacement.

2. The method for detecting a decoy source according to claim 1, wherein each receiver comprises a correlator for correlating the received signal with a local code associated with a satellite and the phase of the signal received by each receiver is estimated at the correlator output.

3. The method for detecting a decoy source according to any one of the preceding claims, further comprising the steps of:

   - computing (401), for at least one pair of distinct satellites, a double phase difference equal to the difference between the phase differences estimated for each receiver and for each respective satellite of the pair,
   - concluding (402) that a decoy source is present if at least one computed double phase difference is substantially zero.

4. The method for detecting a decoy source according to claim 3, further comprising the steps of:

   - computing (401) the sum of multiple double phase differences computed for various pairs of distinct satellites,
   - concluding (402) that a decoy source is present if the phase of the sum is substantially zero.

5. The method for detecting a decoy source according to any one of the preceding claims, wherein the signal reception position is computed (601) based on the pseudoranges computed by the receiver for all satellites.

6. The method for detecting a decoy source according to any one of the preceding claims, wherein the position of the satellite when the signal is transmitted is determined (602) based on a received time measurement associated with the computed pseudorange and on ephemerides.

7. A satellite radionavigation signal reception device comprising two distinct receivers (RX1, RX2), each capable of receiving satellite radionavigation signals, and a computing unit (DL) configured to execute the steps of the method for detecting a decoy source of a satellite radionavigation signal according to any one of claims 1 to 6.

FIG.1

201    Réception signal RX$_1$

202    Réception signal RX$_2$

211    Estimation phase

212    Estimation phase

220    Calcul différence phases

230    Comparaison différence phases

FIG.2

FIG.3

201 — Réception signal RX$_1$

202 — Réception signal RX$_2$

211 — Estimation phase

212 — Estimation phase

220 — Calcul différence phases

401 — Calcul double différences

402 — Test leurrage

## FIG.4

FIG.5

201,202 — Réception signal

601 — Calcul position réception

602 — Calcul position satellite

603 — Calcul déplacement satellite

604 — Correction différences de phases

# FIG.6

FIG.7

## RÉFÉRENCES CITÉES DANS LA DESCRIPTION

**Littérature non-brevet citée dans la description**

- **DOMÍNGUEZ E et al.** *Multi-Antenna Techniques for NLOS and Spoofing Détection Using Vehicular Real Signal Captures in Urban and Road Environments,* 18 Septembre 2015